Europäisches Patentamt

European Patent Office

Office européen des brevets

(11) Publication number: **0 329 193**
**A1**

# (12) EUROPEAN PATENT APPLICATION

(21) Application number: **89104418.2**

(22) Date of filing: **22.10.86**

(51) Int. Cl.⁴: **F16C 33/10**

(30) Priority: **22.10.85 US 790188**

(43) Date of publication of application:
**23.08.89 Bulletin 89/34**

(60) Publication number of the earlier application in
accordance with Art.76 EPC: **0 221 727**

(84) Designated Contracting States:
**BE DE FR GB IT LU NL SE**

(71) Applicant: **RELIANCE ELECTRIC INDUSTRIAL
COMPANY**
**P.O. Box 499**
**Greenville South Carolina 29602(US)**

(72) Inventor: **Heshmat, Hooshang**
**968 Albany Shaker Road**
**Latham New York(US)**
Inventor: **Gorski, Paul T.**
**408 Hunting Hill Circle**
**Greer South Carolina 29651(US)**

(74) Representative: **Harvey, David Gareth et al**
**Graham Watt & Co. Riverhead**
**Sevenoaks Kent TN13 2BN(GB)**

(54) **An improved bearing assembly, such as a thrust bearing.**

(57) A shaft bearing has a housing (10) incorporating
an internal oil reservoir (12) and means to connect
the bearing to an external oil supply. Fitted in the
housing (10) is a liner (30) which is grooved (at 40)
to accommodate an oil ring (50) which dips into the
reservoir (12). The liner (30) also possesses internal
axial grooves (35) for feeding oil into a shaft (S), the
oil reaching the grooves (35) from the oil ring (50)
via ring groove (40). Restrictors (37) at the ends of
grooves (35) permit controlled oil escape from the
groove and return to the reservoir (12). The liner (30)
has arcuate recesses (33) at its ends, and the liner
has a length to bore ratio of 0.87 to 0.92; thanks to
this ratio, the bearing operates at lower power loss
under various loads when flooded with, or starved of,
oil. The bearing may be fitted with specially de-
signed thrust pad bearings (60) also functional effi-
ciently under flooded or starved conditions.

Fig. 1

Fig. 3

## AN IMPROVED BEARING ASSEMBLY, SUCH AS A THRUST BEARING

The present invention relates to an improved bearing assembly. Bearings to which this invention relate are capable of attaining high load capabilities while maintaining low power losses, surprisingly for both flooded and starved conditions.

Hydrodynamic bearings in the form of pillow blocks have been used for at least a hundred years and still remain in wide use as lubricated bearing systems for general applications. Initially, such bearings were utilized for relatively low-speed operations at moderate radial and thrust loads. More recently, however, the range of use of such bearings has been extended due to the introduction of new lubricants, improvements in oil delivery systems, overall improvements to bearing efficiency, and the like.

Hydrodynamic bearings depend on positive pressure generation of an oil film for successful operation. In considering proper bearing operation, many factors come into play such as film thickness, lubricant temperature, operational speeds, load, and the like.

Generally speaking, bearing operations may vary considerably under different operating conditions such as the parameters noted above, and a bearing designed for one particular set of operating conditions may not perform effectively for a different set of conditions. Heretofore, such differences have led manufacturers generally to design separate bearing assemblies for specific operational parameters. Such, of course, increases not only the expense of an individual bearing assembly, but also requires the manufacturer to maintain significant inventories to meet the needs for each separate application.

It has been stated that a bearing should desirably be capable of operation at maximum load capabilities with minimum power losses under both flooded and starved lubricant conditions. The bearing system according to the present invention approaches the aforementioned optimized bearing operation surprisingly effectively. Particularly, the present bearings have the ability to carry both radial and thrust loads at reduced power losses under both fluid film starved and flooded conditions. Furthermore, the bearing system of the present invention may be presented in a self-contained unit that requires very little maintenance, and in the same form can utilize an external source of lubricant and/or an internal circulating lubricant system.

An object of the present invention is to provide an improved bearing assembly that performs effectively under both starved and flooded lubricant conditions, e.g. is capable of carrying radial and thrust loads while operating at high load capabilities and low power losses for both flooded and starved conditions.

Desirable features of the bearing assembly are that it may be self-contained, require little maintenance and may operate in the same form under both external or internal lubricant supply arrangements.

An improved bearing assembly according to the present invention can be modular in concept such that the assembly may serve as a simple journal bearing, a combination journal-thrust bearing, or a simple thrust bearing.

Another object of the present invention, in particular, is to provide improved thrust bearings that operate under starved or flooded lubricant conditions with less power loss than conventional thrust bearings.

An improved bearing assembly according to the present invention comprises a housing which defines a shaft receiving opening therethrough; and a liner is received in the housing and defines a shaft receiving bore opening therethrough and an enlarged annulus at opposite ends of said bore opening, the liner further defining at least one lubricant delivery groove adjacent the bore opening and extending axially therealong, said lubricant delivery groove having restrictor means at opposite ends of same, and the bore opening having a length to diameter ratio of from about 0.87 to about 0.92. A thrust bearing may also be secured to opposite sides of said liner. The thrust bearings have a shaft receiving bore opening therethrough concentric with the liner bore opening and include a plurality of thrust pads located in a thrust surface around the bore opening. The thrust pads have radially extending lubricant grooves or passageways located therebetween, and with oil bleeders or throttles at outer ends of same.

The description which now follows is given by way of non-limitative illustration of features of this invention.

Two or more lubricant delivery grooves are preferably located in the liner bore opening, along opposite sides of same, and are preferably provided with openings therein for communication with an external source of lubricant which may be supplied therethrough for lubrication of the bearing. Likewise, utilizing an internal lubricant delivery system, one or more oil rings or the like may be received about the liner to rotate with rotation of a shaft received therethrough and with a portion of the ring passing through a lubricant reservoir where lubricant is removed therefrom and is transported to the rotating shaft. In a preferred arrangement, the oil ring is present with supplemental lubricant feed from an external source, if required. Likewise, with both an oil ring delivery system and an external oil delivery system, the oil ring system serves as an emergency back-up system in the event of failure of the external system.

A bearing assembly according to the present invention may include a journal bearing only, a journal bearing and thrust bearings, thrust bearings only or thrust bearings in combination with roller bearings or the like. Thrust bearings utilizable with the assembly of the present invention are secured to opposite ends of the bearing liner and define a shaft bore opening therethrough, concentric with the bore opening through the liner. A plurality of thrust pads are provided around the bore opening of the thrust bearing and extend radially outwardly therefrom. Each of the thrust pads is provided with a suitable configuration for receipt and subsequent delivery of lubricant to a thrust runner employed in conjunction therewith. In one embodiment, the thrust pads may be scalloped at opposite ends defining a compound taper with a lubricant groove located along a lower surface of adjoining scalloped areas and with a lubricant bleeder being located between said groove and an outer periphery of the thrust surface of the bearing. Likewise, in another form the thrust pads include a flat land area and a tapered area with radial oil grooves located between thrust pads.

Insofar as the overall bearing assembly of the present invention is concerned, it has been determined surprisingly through experimentation that when certain liner bore and thrust bearing characteristics are maintained within certain ranges, the bearing assembly is suitable for unexpectedly wide-spread use approaching the optimized bearing assembly as discussed hereinbefore. In other words, a bearing assembly according to the present invention, and in the correct configuration, is capable of maintaining unexpectedly high thrust and radial loads with minimal power loss, surprisingly under both flooded and starved lubricant conditions, and thus is capable of achieving higher rotational speeds.

Important characteristics for the journal bearing liner include axial length of the bore, the length of the axial oil groove, location of oil feeding holes inside the axial oil groove, width and shape of the axial oil groove, undercutting of the upper liner bore in a slot area for receipt of oil rings, and dams located on the split surface of the liner at the entrance to the axial oil groove.

The thrust face of a liner so equipped, so noted above, is also important insofar as enhancement of thrust bearing characteristics under the overall load conditions. Features deemed to be of importance for the thrust bearings are the number of pads per thrust surface, shape of the pads, slope angle of the pads, location of the pads on the thrust surface, a separating shroud between the pads and the exterior of the bearing, and a circumferential groove delivering oil from the journal bearing to the thrust surface pads.

Additionally, modular design of the bearing assembly according to the present invention accommodates both thrust units and expansion bearings while as noted below, optimized geometry of the bore and thrust surfaces permit operation with minimum power losses for both flooded and starved lubricant conditions for ring type and/or external lubricant circulation systems. Still further, symmetrical configuration of the thrust pads for one embodiment of the thrust bearing permits bidirectional bearing operation while a large number of pads per thrust surface leaves a substantial flat area on the thrust surface, contributing to an increase in total lead capacity.

Tapering of the pads on one embodiment of the thrust surface in both a circumferential and radial direction and with no peripheral openings for oil in the thrust surface therearound, limits exit of oil therefrom only through radial bleeders, so that there is greater effective use of the amount of lubricant present. A circumferential groove geometry on the thrust surface at the inner radius of the thrust bearing permits oil flow from the axial oil groove in the liner into each feeding groove of the thrust surface. Further, the particular design of the axial oil grooves in the bore of the journal bearing and the location of the oil inlets provides a most effective mixing of oil whereby an extended film length is realized.

Dams may also be provided, located on the split surface of the liner, at the entrance to the axial oil groove which restrict the flow of oil and direct oil into the axial oil groove. Moreover, circumferential undercutting of the upper liner portion bore in a slot area allows penetration of the oil into the clearance gap and protects from oil losses.

Embodiments of the invention will now be described by way of example in more detail with reference to the accompanying drawings, in which:

Figure 1 is a partial cut-away view of a bearing assembly according to the present invention illustrating a partial vertical cross-section of an interior configuration of the bearing assembly.

Figure 2 is a side elevational view of a bearing assembly illustrated in Figure 1.

Figure 3 is a vertical cross-sectional view of one embodiment of a journal bearing liner according to teachings of the present invention.

Figure 4 is an end elevational view of an end of the liner as shown in Figure 3 illustrating one embodiment of a thrust bearing secured to same.

Figure 4A is a planar view of a portion of the thrust bearing as illustrated in Figure 4.

Figure 5 is an enlarged cross-sectional view of an axial oil delivery groove present in the bore of a journal bearing liner according to the present invention.

Figure 6 is an enlarged view of a portion of an enlarged annulus provided at opposite ends of the shaft receiving bore of a bearing line according to the present invention.

Figure 7 is an enlarged view of a portion of a thrust pad according to the thrust bearing embodiment illustrated in Figure 4.

Figure 8 is an enlarged view of a further embodiment of a thrust pad as illustrated in Figure 4.

Figure 9 is a vertical cross-sectional view of a further embodiment of a bearing liner according to the present invention.

Figure 10 is an elevational view of a further embodiment of a thrust bearing secured to opposite ends of the liner as illustrated in Figure 9.

Figure 11 is a further detailed planar view of a portion of the thrust bearing embodiment as illustrated in Figure 10.

Figure 12 is a cross-sectional view of a portion of the thrust bearing surface illustrated in Figure 11 taken along a line XII-XII, and with a portion of a thrust runner in cross-section adjacent thereto.

Making reference to the figures, preferred embodiments of the present invention will now be described in detail.

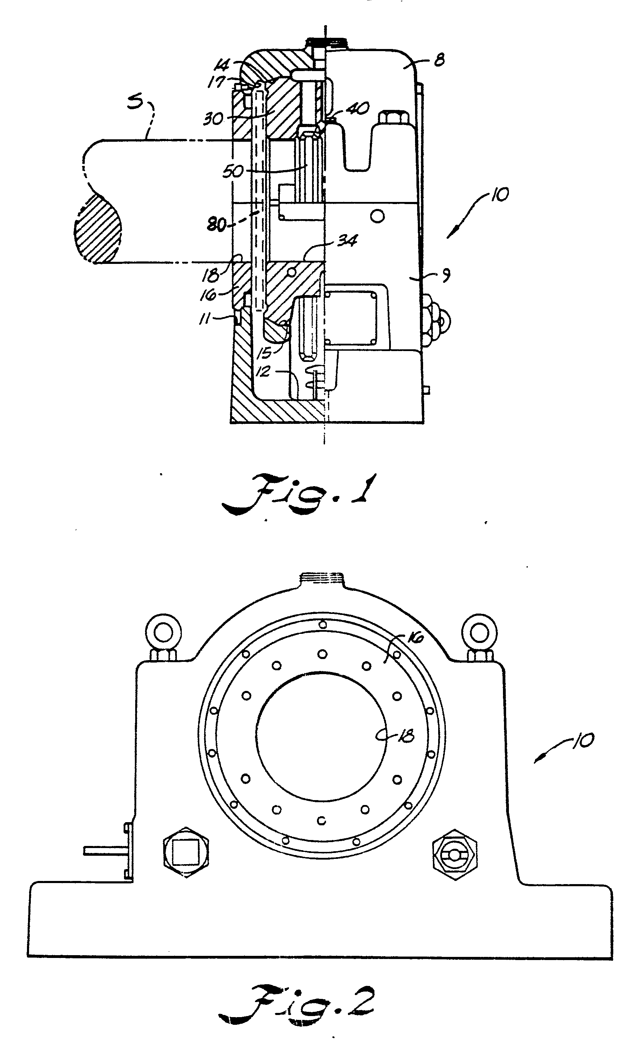

Figures 1 and 2 illustrate one embodiment of an overall bearing assembly according to the present invention, arranged for use as a free bearing, i.e. one not intended to handle thrust loads. A pedestal housing generally 10 is provided that serves as a general enclosure for the elements of the overall assembly and defines an opening 11 therethrough for supporting receipt of a rotatable shaft S as shown in phantom.

An upper housing portion 8 and a lower housing portion 9 are interconnectable to provide housing 10 with stiffness in a radial direction from a bore opening 18 located through housing 10 for receipt of shaft S. Housing 10 defines an oil reservoir 12 in lower housing portion 9 to preferably permit an oil ring utilized therewith to be submerged in oil at a level of about 15 percent of the diameter of the oil ring.

A liner, generally 30 is received within housing 10, being properly located and maintained by a plurality of liner mounts 14, 15 that are defined by an inside of housing portions 8 and 9, respectively, above and below liner 30. When the bearing assembly is properly received and secured about liner 30 is thus restricted from movement. Also as illustrated in Figure 1, a space 17 is defined adjacent liner 30 on opposite sides of same (only one shown) for receipt of a thrust runner 80 (indicated in phantom) when the bearing assembly is to be employed as a fixed bearing, and as described in more detail hereinafter. A sealing ring 16 is also provided on opposite sides of housing 10 within opening 11 and defines shaft receiving bore opening 18 therethrough. Sealing ring 16, in conjunction with appropriate seals thus basically encloses housing 10 and thus the bearing assembly by inclusion of proper seals at relevant locations. Moreover, as generally illustrated but not described, housing 10 is also provided with conventional means for mounting same, ports for the addition of lubricant, means to facilitate transfer or lifting of the assembly and the like.

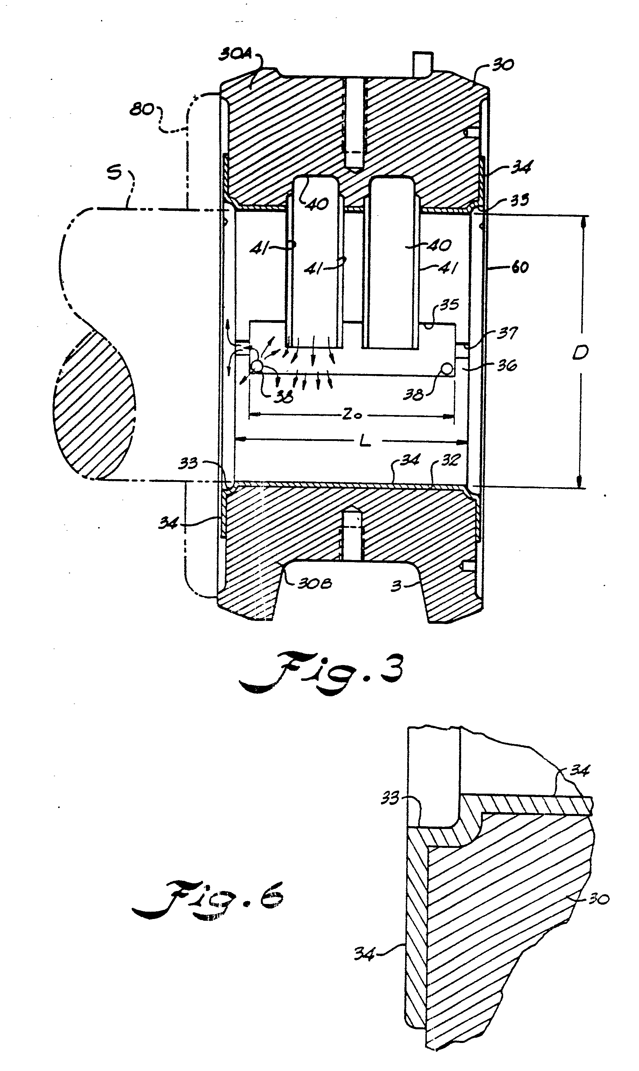

Liner 30 as illustrated in Figure 3 includes an upper liner portion 30A and a lower liner portion 30B which are interconnected to define the overall liner structure. Unless the individual liner portions 30A, 30B are necessary for description of a particular feature, reference will be made hereinafter only to liner 30.

Liner 30 defines a shaft receiving bore opening 32 with an enlarged annulus 33 at opposite ends of same and with a journal bearing surface 34 received therein. Liner 30 further defines at least one, and preferably two or more, axial oil grooves 35 that extend along bore opening 32 with a dam or restrictor means 36 located at opposite ends of same, defining a restricted orifice 37 thereat. Oil grooves 35 also preferably define a pair of openings 38 adjacent opposite ends of same for supply of oil into groove 35 from an external oil circulation system.

Upper liner portion 30A defines at least one groove 40 therein for receipt of an oil ring 50 (see Figure 1). Two such grooves are shown in Figure 3 with undercut areas 41 extending along opposite sides of same. As can be seen in Figure 1, oil ring 50 is received within groove 40 and rests atop a shaft S extending through bore opening 32. A lower portion of ring 50 resides within oil reservoir 12 preferably with about 15 percent of its diameter submerged in oil. As shaft S rotates, ring 50 rotates therewith, lifting oil from reservoir 12 and depositing same atop shaft S. Oil from shaft S then optimally forms a lubricating film for proper lubrication between shaft S and bearing assembly 10.

It has been determined that oil ring bearing lubricant systems do not supply the total lubricant requirements for full film lubrication, whereby with any oil ring system, a degree of lubricant starvation exists. While improvement may be achieved by particular design of an oil ring to enhance oil delivery, further improvement may be realized by use of an axial oil groove 35 as mentioned above. With an oil ring 50 delivering oil to shaft S, the undercut areas 41 adjacent grooves 40 aid in directing oil from ring 50 into axial oil groove 35. Normally an oil film around a rotating shaft tends to diminish in thickness from a primary point of formation outwardly towards opposite ends of same. It is therefore highly desirable to attempt to maintain a uniform thickness across the entire width of the film. Further, when thrust bearings are utilized on opposite ends of a journal bearing and thus adjacent the conventional feathered film areas, inadequate lubrication of the thrust surface can result. Oil groove 35 with its restricted orifice 37 assists in maintaining a ready supply of oil across the intended film width, as opposed to conventional structures, whereby an improved film results. Such construction further improves the supply of oil to a thrust bearing, particularly where additional oil is supplied to groove 35 through openings 38.

A general flow of oil from groove 35 and restricted orifice 37 is indicated by the arrows in Figure 3.

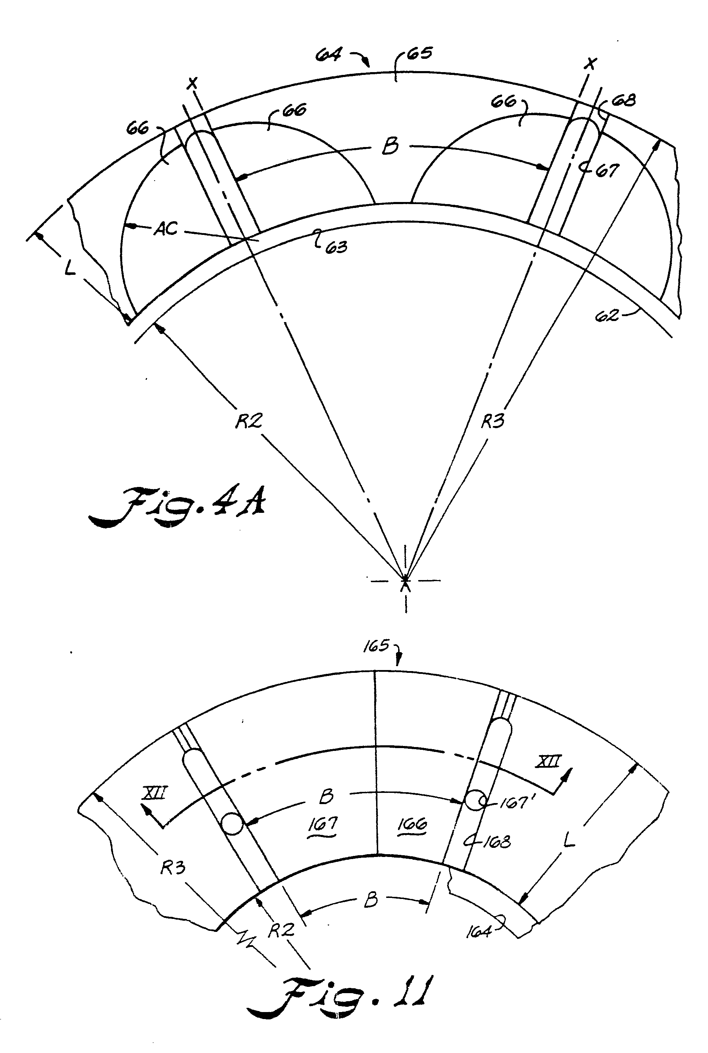

It has been determined that surprisingly efficient operation under both starved and flooded conditions as will be described in more detail hereinafter, results when the ratio of the length (L) of bore 32 to diameter (D) of bore 32 as illustrated in Figure 3 ranges from about 0.87 to about 0.92. In like fashion, to minimize the feathering of the oil film outwardly from a central location from groove 35, oil inlet feeder openings 38 are preferably specifically located along groove 35. Making reference to Figure 3, Zo indicates the distance between center lines through openings 38. It has been determined that oil feeder openings 38 should be located along oil groove 35 to achieve a ratio of Zo/L of from about 0.76 to about 0.87, again to afford a bearing capable of operating under both starved and flooded conditions without excess power loss. Further, refering to Figure 5, it is seen that lines drawn from extremeties of groove 35 to a point of intersection at a center line axial to the bore of liner 30 form an angle $\theta$ while similar lines drawn from extremeties of orifice 37 form an angle $\theta'$. For operation under starved and flooded conditions, angle $\theta$ is preferably about 30° while angle $\theta'$ is preferably about 20°.

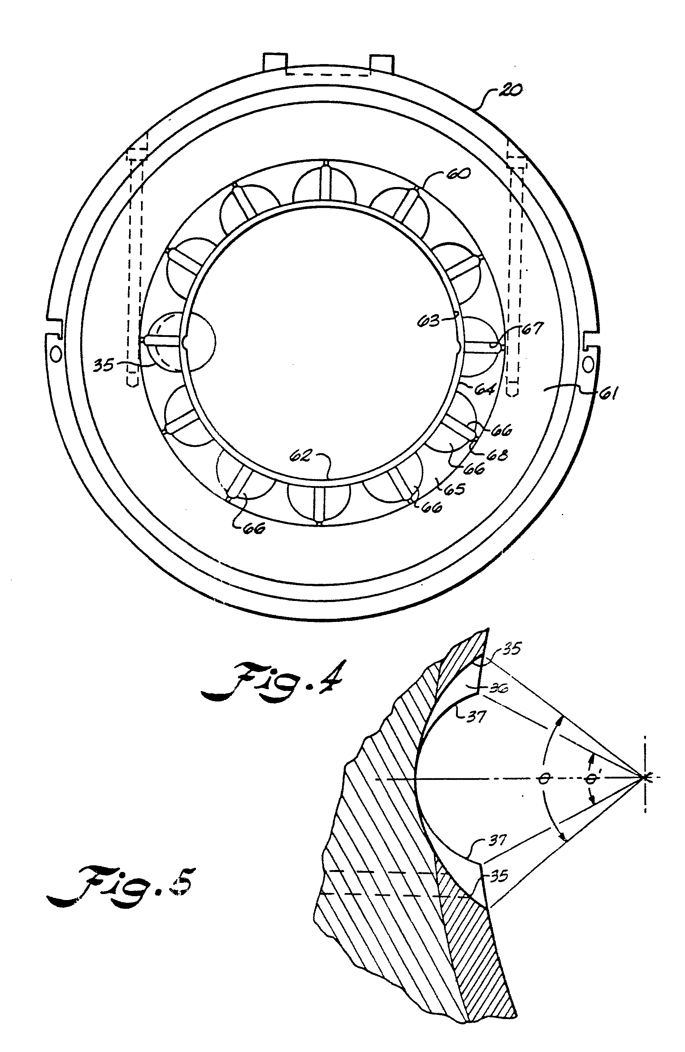

Oil groove 35 as noted above, further feeds a thrust bearing if same is employed. When a fixed bearing arrangement is desired, a thrust bearing 60 (see Figure 4) is secured to opposite sides of liner 30. Additionally, a thrust runner 80 illustrated in phantom in Figures 1 and 3 is located adjacent bearing 60 secured to shaft S within space 17, thus affording a thrust load capability for the bearing assembly.

Referring to Figures 4, 4A, 7, and 8 it may be seen that a thrust bearing generally 60 may be provided with the bearing assembly of the present invention. Thrust bearing 60 is located on a base 61 defining a shaft receiving bore opening 62 therethrough. Located about bore opening is an annular oil groove 63. Located about bore opening 62 and annular groove 63 are a plurality of thrust pads 64 which include a flat land portion 65 and composite tapered or scalloped portions 66 at opposite ends of same. As may be specifically seen in Figure 4A, a thrust pad 64 includes the area between lines X, X, thus incorporating two scalloped areas 66. Scalloped areas 66 of adjacent thrust pads 64 have a radially extending oil groove 67 therebetween that communicates with an oil bleeder 68 at an outer end of same. Radial grooves 67 and oil bleeder 68 extend from annular oil groove 63 through bearing surface 60.

In operation, with shaft S rotating, oil is supplied to axial oil groove 35 of liner 30 via one or more oil rings 50 or oil rings 50 and an external oil circulation system (not shown) that is in communication with axial groove oil inlet feeder openings 38. Oil then escapes groove 35, forming an oil film on shaft S for lubrication of same.

As shaft S rotates, oil is provided to thrust bearings 60, if present, by passing from orifices 37 into annular groove 63 about pore opening 62 and then into thrust pad scalloped areas 66 and oil grooves 67. With a thrust runner 80 adjacent thrust bearing 60, lubricant located in radial grooves 67, feeds scalloped areas 66 and is generally confined therein for improved bearing lubrication. In fact, excess oil may escape from thrust pads 64 only through bleeders 68 after which it returns to reservoir 12 of housing 10. Composite tapered portions 66 of thrust pads 64 are symmetrical, leading to reduced costs of production, and also a capability of bidirectional rotational operation.

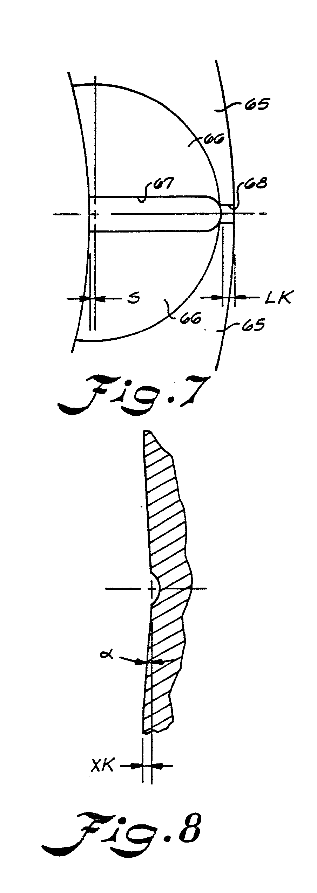

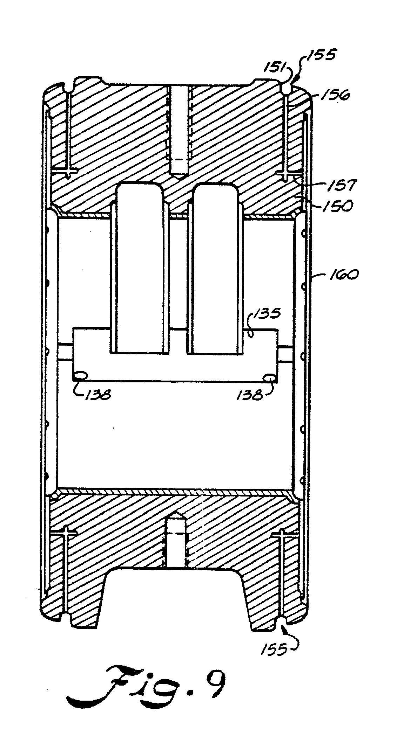

A most preferred embodiment of thrust bearing 60 may be defined according to the following characteristics as best described in Figures 3, 7, and 8. Scalloped areas 66 as mentioned above include a compound taper in both radial and circumferential directions. In Figure 7, the dimension S represents the distance between an inner radius of scalloped areas 66 and the central point of location of a cutting tool used to produce areas 66. The distance S may, in fact, be a positive number (in a direction outwardly of area 66) or a negative number in an opposite direction. Preferably, the value of S ranges from about 0.03 to about -0.04 inch (0.76 to -1.02 mm). Also illustrated in Figure 7 is a dimension LK indicative of the length of oil bleeder 68 which preferably ranges from about 0.05 to about 0.10 inch (1.27 to 2.54 mm). Figure 8 illustrates the angle alpha associated with scalloped areas 66 as well as the depth XK of scalloped area 66 down to the top of radial grooves 67. Such is measured along a line Ac coincident with a deepest portion of scalloped areas 66. Preferably angle alpha should be about 0.5 degrees, while XK should range from about 0.005 to about 0.010 inch (0.13 to 0.25 mm). A further important characteristic of bearing 60 is the ratio of the radial length of the thrust surface (L) to the length of an arcuate line B extending across the middle of the thrust pad. Preferably L/B ranges from about 0.65 to about 1.04. The thrust bearing characteristics noted above are most preferred characteristics for specific bearings having a number of thrust pads ranging from about 8 to about 12.

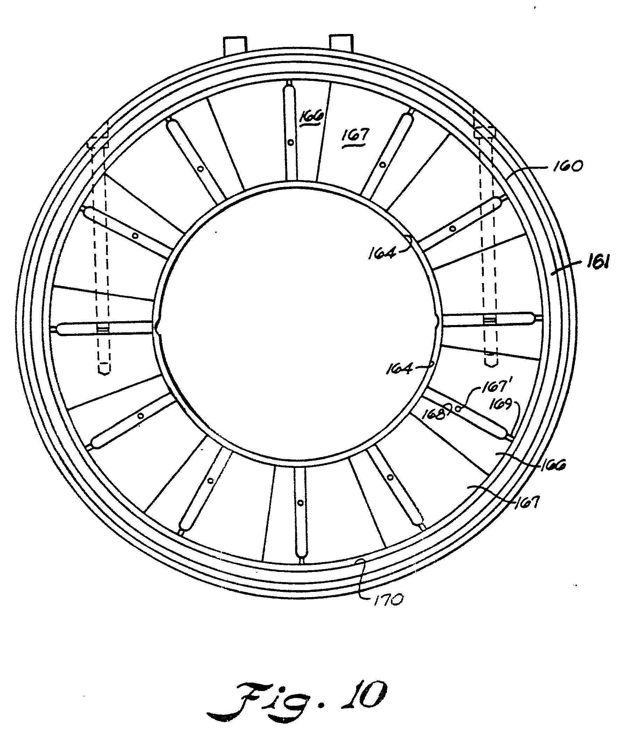

A further embodiment of a thrust bearing arrangement is illustrated in Figures 9, 10, 11 and 12. In Figure 9, a bearing liner 150 is illustrated which is of like general construction and has the same preferred characteristics as liner 30 of Figure 3 except for a plurality of lubricant ports generally 155, received around opposite sides of same. Lubricant ports 155 include a first circumferentail leg 156 that communicates with a groove 151 extending around the periphery of liner 150 and an axially extending leg 157 that extends into communication with a thrust bearing generally 160. Lubricant grooves 151 may also communicate with oil delivery openings 38 of axial oil groove 135.

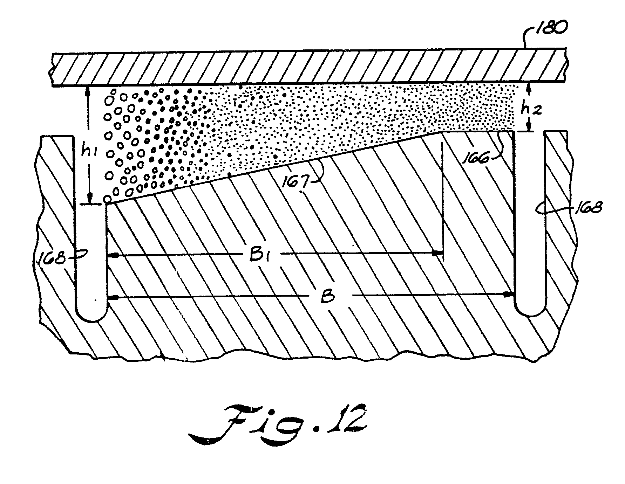

As illustrated in Figure 10, thrust bearing 160 is located on a base 161 and has a plurality of thrust pads 165 located around an inner annular oil groove 164, extending radially outwardly therefrom. Each thrust pad 165 includes a flat land portion 166 and a tapered land portion 167. A radially extending oil groove 168 is located between thrust pads 165 and extends from annular groove 164 to an oil bleeder 169 which terminates at an outer annular oil groove 170. Radial oil grooves 168 also define an oil supply opening 167 in a bottom of same, (See Figure 11) which communicate with axial legs 157 of the oil delivery ports 155 whereby oil may be positively supplied to thrust bearing 160. Liner 150 and thrust bearings 160 are more precise than the liner-thrust bearing arrangement of Figures 3 and 4, and are capable of carrying more thrust load. The liner-thrust bearing arrangement of Figures 9, 10, 11 and 12 are unidirectional bearings intended for premium performance situations, though reverse rotation is possible with lesser performance.

Thrust bearing 160 also possesses characteristics which are preferably controlled within certain limits for improved bearing operations under both starved and flooded conditions. Figures 11 and 12 illustrate such characteristics. The ratio of the radial length L of the thrust bearing 160 to the radius $R_3$ measured from a central point of the bearing to an outer edge of the thrust surface should range from about 0.253 to about 0.325. The base angle B of the thrust pads 165 is preferably about 27 degrees. B represents the circumferential distance at about the middle of the thrust pad determined by the formula

$$\frac{R_3 - R_2}{-2}$$

where $R_3$ is described above and where $R_2$ is the radius of the inner circumference of the thrust surface. The ratio of the radial length L of the thrust pad to the circumferential length B of the pad preferably ranges from about 0.61 to about 1 and most preferably is approximately 0.8. The ratio of the circumferential length of the tapered portion $B_1$ of pad 165 to the total length B of pad 165 preferably ranges from about 0.72 to about 0.75. The ratio L/B as defined with respect to thrust bearing 60 preferably ranges from about 0.66 to about 0.80 for thrust bearing 160. Also, the ratio of the distance between the thrust bearing 160 and the thrust runner 180 at the flat land 166 ($h_1$) to the deepest tapered portion 167 ($h_2$) should be about 2.45. $h_1$ may range from 0.0007 to 0.0015 inch (0.018 to 0.038 mm).

In arriving at the bearing characteristics noted above as preferable for bearings according to the presentation to properly operated under both starved and flooded conditions, testing was conducted. Two test bearing assemblies were mounted on a shaft flexibly coupled to a 100 horsepower (74.5 KW) vari-drive motor. One of the bearing assemblies included a thrust face while the other was a free bearing. The load was applied via a hydrostatic bearing between the journal bearings. The test bearings were also constructed for oil ring and external lubrication. External oil supply was provided via the holes described herein in the axial oil grooves. Bearing characteristics as identified herein, were varied to ascertain the ranges that were operable with minimum power losses under both starved and flooded conditions. Appropriate pressure taps, thermocouples and eccentric probes were installed. Lubricant used was SAE 10, SAE 20 and SAE 30 oil. The testing indicated that the characteristics and ranges set forth hereinbefore yielded optimum and unexpectedly good performance surprisingly under all lubricant conditions.

It will be understood, of course, that while the form of the invention herein shown and described constitutes a preferred embodiment of the invention, it is not intended to illustrate all possible forms of the invention. It will also be understood that the words used are words of description rather than of limitation and that various changes may be made without departing from the spirit and scope of the invention herein disclosed.

## Claims

1. An improved thrust bearing comprising a base (61) defining a bore opening (62) therethrough and an annular oil groove (63) therearound, the base further defining a thurst surface thereon which thrust surface defines a plurality of thrust pads (64) therearound, for example 8 to 12 pads, a radial oil groove (67) being located between adjacent thrust pads with an oil bleeder (68) being located at an outer end of each oil groove (67) and in communication therewith, and the said thrust pads (64) having scalloped areas (66) at opposite ends of same adjacent the radial grooves (67) whereby the thrust bearing (60) when used in conjunction with a thrust runner (80) is capable of bidirectional rotation and is operative under both starved and flooded lubricant conditions with low power losses.

2. A thrust bearing according to claim 1, wherein said scalloped areas (66) are inclined to the thrust surface at an angle ($\alpha$) of about 0.5 degree.

3. A thurst bearing according to claim 1 or claim 2, wherein said scalloped areas (66) are from about 0.005 to about 0.010 inch (0.13 to 0.25 mm) deep.

4. A thurst bearing according to claim 1, 2 or 3, wherein the oil bleeders (68) are from about 0.05 to about 0.10 inch (1.27 to 2.54 mm) in length.

5. A thrust bearing according to any of claims 1 to 4, wherein the distance between inner radii of the scalloped areas (66) and a centre of location of a tool that formed them is about 0.03 to about -0.04 inch (0.76 to -1.02 mm).

6. A thurst bearing comprising a base (161) defining a bore opening (164) therethrough and an annular oil groove therearound, said base further defining a thrust surface thereon which thrust surface defines a plurality of thrust pads (165) therearound, for example 12, a radial oil groove (168) located between adjacent thrust pads (165) and an oil bleeder (169) located at an outer end of each oil groove (168) and in communication therewith, and the thrust pads (165) each comprising a flat land (166) portion and a tapered portion (167), whereby said thrust bearing when used in conjunction with a thrust runner (180) is capable of operation under both starved and flooded lubricant conditions with low power losses.

7. A thurst bearing according to claim 6, wherein the ratio L/B for said thrust surface is from about 0.61 to about 1, L being the radial length of the pad (165) and B being its arcuate extent measured across the middle of the pad.

8. A thrust bearing according to claim 6 or claim 7, wherein the ratio $B_1/B$ is from about 0.72 to about 0.75, where $B_1$ is the length of the tapered portion (167) and B is the total length of the pad (165).

9. A thrust bearing according to claim 6, 7 or 8, wherein the ratio $L/R_3$ is from about 0.253 to about 0.325, where L is the radial length of the pad (165) and $R_3$ is its outer radius.

10. A thrust bearing according to any of claims 6 to 9, wherein a base angle ($\beta$) of the thrust pad (165) is about 27 degrees.

11. A thrust bearing according to any of claims 6 to 10, wherein the ratio of the distances $h_1/h_2$ from a thrust runner (180) to the thrust surface, and to a furthest part of the tapered portion (167) of the pad (165) is approximately 2.45.

Fig.1

Fig.2

*Fig.3*

*Fig.6*

*Fig.4*

*Fig.5*

Fig.4A

Fig. 11

*Fig.7*

*Fig.8*

Fig. 9

*Fig. 10*

Fig. 12

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-3 025 876 (HITACHI LTD.)<br>* figures 2,5 * | 1,6 | F 16 C 33/10 |
| A | DE-A-3 140 017 (FLENDER GMBH & CO. KG)<br>* figures 5,7 * | 1,6 | |
| A | FR-A-1 599 665 (SOCIETE D'APPLICATIONS GENERALES D'ELECTRICITE ET DE MECANIQUE)<br>* figure 2 * | 1,6 | |
| A | EP-A-0 158 242 (ARCOMAC S.A.)<br>* figures 1,3,4; positions 9,10 * | 1,6 | |
| A | DE-A-2 900 363 (INSTITUTUL DE CERCETARE STIINTIFICA SI INGINERLE TEHNOLOGICA PENTRU MASINI-UNELTE, AGREGATE MECANICAFINA SI SCULE TITAN, BUKAREST)<br>* claims 1-4; figures 1-3 * | 1,6 | |
| A | US-A-3 625 576 (K.H. MILLER)<br>* columns 1,2; figures 1,2 * | 1,6 | TECHNICAL FIELDS SEARCHED (Int. Cl.4)<br><br>F 16 C |

The present search report has been drawn up for all claims

| Place of search | Date of completion of the search | Examiner |
|---|---|---|
| BERLIN | 20-04-1989 | HOFFMANN M.P. |

EPO FORM 1503 03.82 (P0401)